# FASCICULE DE BREVET EUROPEEN

(11) **EP 0 714 728 B1**
(45) Date de publication et mention de la délivrance du brevet: **06.05.1998**
(21) Numéro de dépôt: 95402309.9
(22) Date de dépôt: 16.10.1995
(51) Int. Cl.: B23K 37/04, B23K 26/00

(54) **Dispositif de guidage et de transfert d'au moins deux flans de tôle préalablement accostés bord à bord, notamment dans une installation de soudage**
Führungs- und Verlegungsvorrichtung für wenigstens zwei vorher angedockten Blechzuschnitten, insbesondere in einer Schweissanlage
Transfer and guiding device for at least two pre-butted sheet metal blanks, in particular in a welding installation

(30) Priorité: 28.11.1994 FR 9414230
(43) Date de publication de la demande: 05.06.1996
(73) Titulaire: SOLLAC S.A., 92800 Puteaux (FR)
(72) Inventeur: Peru, Gilles, F-59240 Dunkerque (FR); Henry, Philippe, F-54960 Mercy-le-Bas (FR)
(74) Mandataire: Lanceplaine, Jean-Claude

(56) Documents cités:
- EP-A- 0 583 999

## Description

La présente invention a pour objet un dispositif de guidage d'au moins deux flans de tôle préalablement accostés bord à bord notamment pour une installation de soudage en continu au moyen d'un faisceau à haute densité d'énergie.

Le soudage au moyen d'un faisceau à haute densité d'énergie, comme par exemple un faisceau laser, de deux flans de tôle a trouvé un débouché industriel important notamment dans la production de pièces raboutées et soudées par exemple pour l'industrie automobile.

En effet, deux flans de tôle raboutés, c'est à dire assemblés bord à bord sans recouvrement et soudés au moyen d'un faisceau à haute densité d'énergie, conserve toute leur faculté d'emboutissabilité.

Les flans de tôles peuvent être de différentes formes géométriques et/ou de différentes épaisseurs, voire posséder des nuances d'acier différentes.

A cet effet, il est connu pour souder deux flans de tôle bord à bord de les joindre et de soumettre le plan de joint desdits flans de tôles à un faisceau à haute densité d'énergie en faisant défiler en continu ces flans de tôle perpendiculairement à l'axe dudit faisceau.

D'une manière générale, ces installations de soudage comportent une zone de positionnement latérale de l'un des flans de tôle pas rapport à l'axe du faisceau, puis une zone d'accostage des deux flans de tôle bord à bord et enfin une zone d'entraînement de ces flans au-dessous du faisceau à haute densité d'énergie en maintenant bord à bord les deux flans de tôle.

Pour cela, on connaît différents dispositifs de maintien des flans de tôle dans la zone de soudage qui utilisent pour chaque flan de tôle des systèmes de bridage vertical constitués par exemple par des rouleaux.

Mais, ce genre de dispositifs de maintien ne permet pas de souder ensemble des flans de tôle de différentes formes géométriques.

On connaît également un dispositif de maintien qui comporte des paires de palettes, l'une à côté de l'autre portant chacune au moins un flan de tôle.

Les flans de tôle sont fixés par exemple par serrage sur les palettes.

Ce dispositif comporte également, au niveau de la zone de soudage, des rouleaux de pression inclinés pour tenir par le haut les flans de tôles.

Ce dispositif présente un inconvénient qui réside principalement dans le fait qu'il ne permet pas de minimiser le jeu entre les bords à souder des deux flans de tôle si bien qu'au moment du soudage, le jeu augmente à cause de la dilatation thermique de la zone soudée entraînant ainsi des soudures de mauvaises qualités.

On connaît également dans le EP-A-583 999 un dispositif de guidage et de transfert d'au moins deux flans de tôle préalablement accostés bord à bord pour former un plan de joint, notamment dans une installation de soudage en continu au moyen d'un faisceau à haute densité d'énergie, du type comprenant deux ensembles de support et de transfert des flans de tôle en direction du faisceau à haute densité d'énergie, disposés chacun de part et d'autre du plan de joint et déplaçables en synchronisation l'un avec l'autre, chaque ensemble de support et de transfert comprenant au moins une série inférieure de patins déplaçables perpendiculairement au plan de joint et constituant une surface de contact sensiblement continue avec la face inférieure des flans de tôle et au moins une série supérieure de patins déplaçables perpendiculairement au plan de joint disposés en regard de la série inférieure de patins et constituant une surface de contact sensiblement continue avec la surface supérieure des flans de tôle, les patins d'au moins une des deux séries coopérant avec des moyens de mise en pression latérale des bords à souder des flans de tôle par déplacement desdits patins perpendiculairement au plan de joint des flans de tôle et chaque ensemble de support et de transfert coopérant avec des moyens de bridage sous effort vertical des flans de tôle correspondants.

L'invention a pour but de proposer un dispositif de guidage et de transfert d'au moins deux flans de tôle préalablement accostés bord à bord qui permet de contrôler le jeu entre les bords à souder des deux flans de tôle au cours de leur déplacement pendant toute l'opération de soudage.

L'invention a donc pour objet un dispositif de guidage et de transfert d'au moins deux flans de tôle préalablement accostés bord à bord pour former un plan de joint, notamment dans une installation de soudage en continu au moyen d'un faisceau à haute densité d'énergie, du type comprenant deux ensembles de support et de transfert des flans de tôle en direction du faisceau à haute densité d'énergie, disposés chacun de part et d'autre du plan de joint et déplaçables en synchronisation l'un avec l'autre, chaque ensemble de support et de transfert comprenant au moins une série inférieure de patins déplaçables perpendiculairement au plan de joint et constituant une surface de contact sensiblement continue avec la face inférieure des flans de tôle et au moins une série supérieure de patins déplaçables perpendiculairement au plan de joint, disposés en regard de la série inférieure de patins et constituant une surface de contact sensiblement continue avec la surface supérieure des flans de tôle, les patins d'au moins une des deux séries coopérant avec des moyens de mise en pression latérale des bords à souder des flans de tôle par déplacement desdits patins perpendiculairement au plan de joint des flans de tôle et chaque ensemble de support et de transfert coopérant avec des moyens de bridage sous effort vertical des flans de tôle correspondants, caractérisé en ce que chaque ensemble de support et de transfert comprend au moins une série inférieure de chariots articulés entre eux dans un plan vertical et déplaçables parallèlement au plan de joint sur un chemin de roulement formant un plan de référence horizontal, les chariots de ladite série inférieure supportant chacun au moins un desdits patins déplaçable par rapport auxdits chariots perpendiculairement au plan de joint, ou au moins une série supérieure de chariots articulés entre eux dans un plan vertical et déplaçables parallèlement au plan de joint sur un chemin de roulement formant un plan de référence horizontal, les chariots de ladite série supérieure supportant chacun au moins un desdits patins déplacable par rapport auxdits chariots perpendiculairement au plan de joint.

Selon d'autres caractéristiques de l'invention :
- les patins de chaque série de chariots sont indépendants les uns des autres,
- chaque patin est monté déplaçable perpendiculairement aux flans de tôle sur le chariot correspondant,
- chaque patin est monté déplaçable perpendiculairement sur le chariot correspondant par l'intermédiaire de deux rails de roulement disposés chacun de part et d'autre de l'axe longitudinal dudit patin et perpendiculairement au plan de joint des flans de tôle,
- chaque rail de roulement est formé de deux baguettes accolées de section rectangulaire munies sur leurs faces en regard d'une gorge en forme de V à axe horizontal et d'une réglette à rouleaux cylindriques disposée dans lesdites gorges, l'une des deux baguettes étant solidaire du chariot et l'autre desdites baguettes étant solidaire du patin correspondant,
- chaque chariot comporte au moins deux galets à axe horizontal disposés chacun d'un côté du chariot et destinés à coopérer avec le chemin de roulement correspondant pour le guidage dudit chariot,
- chaque chariot comporte au moins un galet à axe vertical destiné à coopérer avec une rainure ménagée dans le chemin de roulement correspondant, ladite rainure formant un axe de référence parallèle au plan de joint des flans de tôle,
- chaque patin comporte un ressort de rappel disposé dans un évidement ménagé sur la face supérieure du chariot correspondant en contact avec ledit patin, une première extrémité du ressort de rappel étant reliée au chariot et une seconde extrémité de ce ressort de rappel étant reliée à une patte verticale solidaire dudit patin,
- chaque patin comporte sur sa face en contact avec les flans de tôle une couche d'un matériau assurant un coefficient de frottement suffisant pour créer l'adhérence avec les flans de tôle correspondants, par exemple un polymère,
- les chariots de chaque série de chariots sont reliés à un organe de déplacement desdits chariots parallèlement au plan de joint des flans de tôle,
- chaque organe de déplacement est formé par une chaîne sans fin formant une boucle dans un plan perpendiculaire aux flan des tôles et reliée à des moyens d'entraînement en rotation,
- les moyens de mise en pression latérale des bords à souder des flans de tôle sont formés par un chemin de guidage latéral coopérant, d'une part, avec les patins de l'une des deux séries de chariots et, d'autre part, avec au moins un organe de poussée selon une direction perpendiculaire au plan de joint des flans de tôle,
- le chemin de guidage est formé par des galets à axe vertical et libres en rotation,
- ledit organe de poussée est constitué par au moins un vérin.

Les caractéristiques et avantages de l'invention apparaîtront au cours de la description qui va suivre, donnée uniquement à titre d'exemple et faite en référence aux dessins annexés, sur lesquels :
- la Fig. 1 est une vue schématique de dessus d'un dispositif de guidage et de transfert d'au moins deux flans de tôle, conforme à l'invention,
- la Fig. 2 est une vue schématique en élévation d'un des deux ensembles de support et de transfert des flans de tôle du dispositif représenté à la Fig. 1,
- la Fig. 3 est une vue schématique en coupe selon la ligne 3-3 de la Fig. 1,
- la Fig. 4 est une vue schématique en élévation et à plus grande échelle d'un chariot et d'un patin d'un ensemble inférieur de support et de transfert des flans de tôle,
- la Fig. 5 est une vue partiellement en coupe selon ligne 5-5 de la Fig. 4,
- la Fig. 6 est une vue en coupe selon la ligne 6-6 de la Fig. 5,
- la Fig. 7 et une vue schématique en élévation et à plus grande échelle d'un chariot et d'un patin d'un ensemble supérieur de support et de transfert des flans de tôle,
- la Fig. 8 est une vue en coupe d'un patin d'un ensemble supérieur de support et de transfert des flans de tôle,

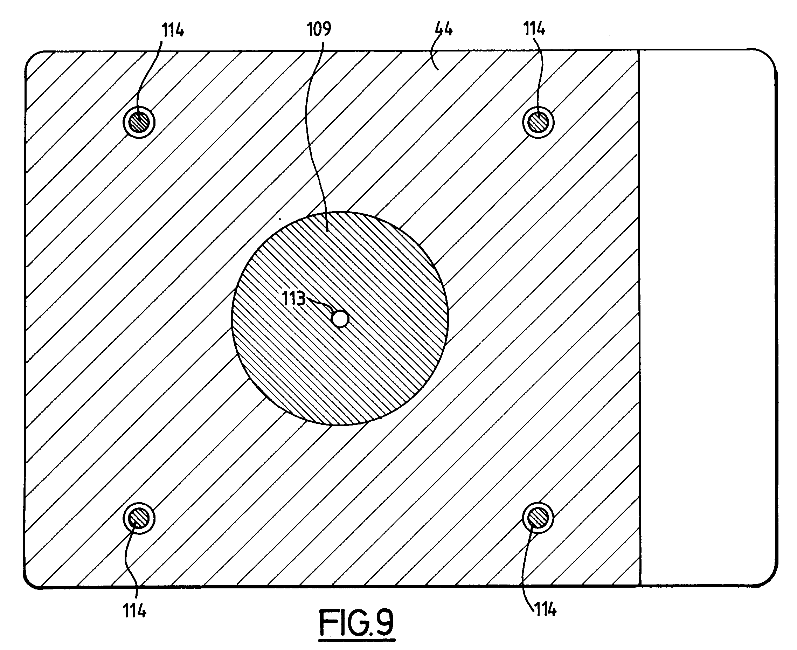

- la Fig. 9 est une vue en coupe selon la ligne 9-9 de la Fig. 8,
- la Fig. 10 est une vue schématique en perspective éclatée d'un rail de roulement disposé entre un chariot et un patin.

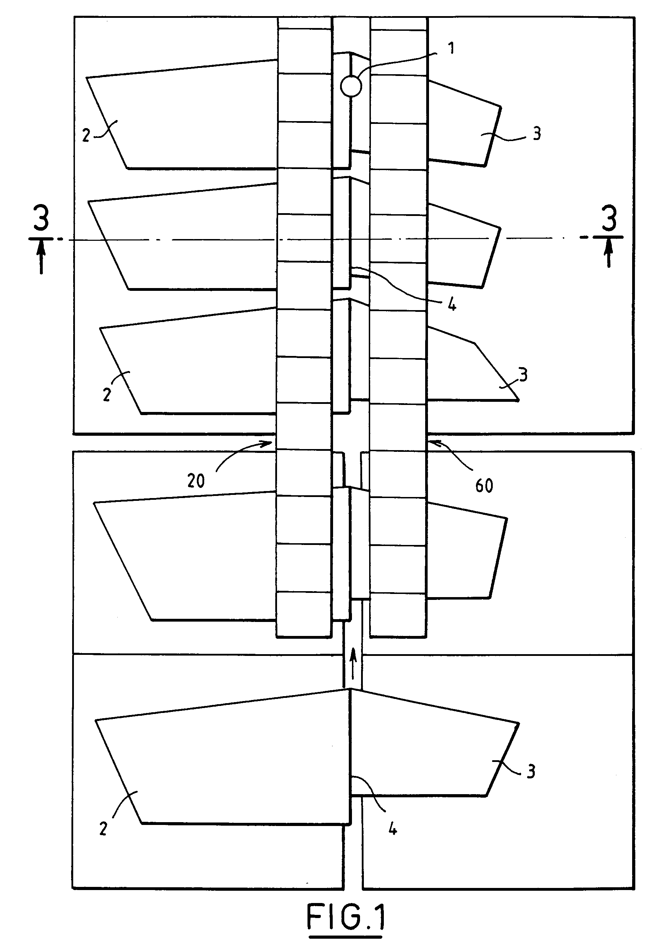

Le dispositif représenté schématiquement à la Fig. 1 est destiné au guidage et au transfert de plusieurs paires de flans de tôle 2 et 3 dans une installation de soudage bord à bord en continu desdits flans de tôle 2 et 3 au moyen d'un faisceau à haute densité d'énergie 1, comme par exemple un faisceau laser.

Les flans de tôle 2 et 3 peuvent être de différentes formes géométriques et/ou de différentes épaisseurs, voire posséder des nuances d'acier différentes, et sont destinés par exemple à l'industrie automobile ou aux industries utilisatrices de pièces semi-finies.

Les deux flans de tôle 2 et 3 de chaque paire sont accostés bord à bord pour former un plan de joint 4 et défilent en continu au-dessous du faisceau à haute densité d'énergie 1 en vue de leur soudage.

Dans le but de leur garantir une qualité de soudure, le positionnement des flans de tôle 2 et 3 doit satisfaire, dans la zone de soudage à plusieurs exigences qui sont notamment la position relative des bords à souder par rapport à l'axe du faisceau à haute densité d'énergie 1 et la pression relative sur ces bords afin de contrôler et de réduire le jeu entre lesdits bords au cours du déplacement des flans de tôle 2 et 3.

A cet effet, le dispositif représenté sur les Figs. 1 à 4 comporte deux ensembles 20 et 60 de support et de transfert des flans de tôle 2 et 3 en direction du faisceau à haute densité d'énergie 1, disposés chacun de part et d'autre du plan de joint 4 et déplaçables en synchronisation l'un avec l'autre.

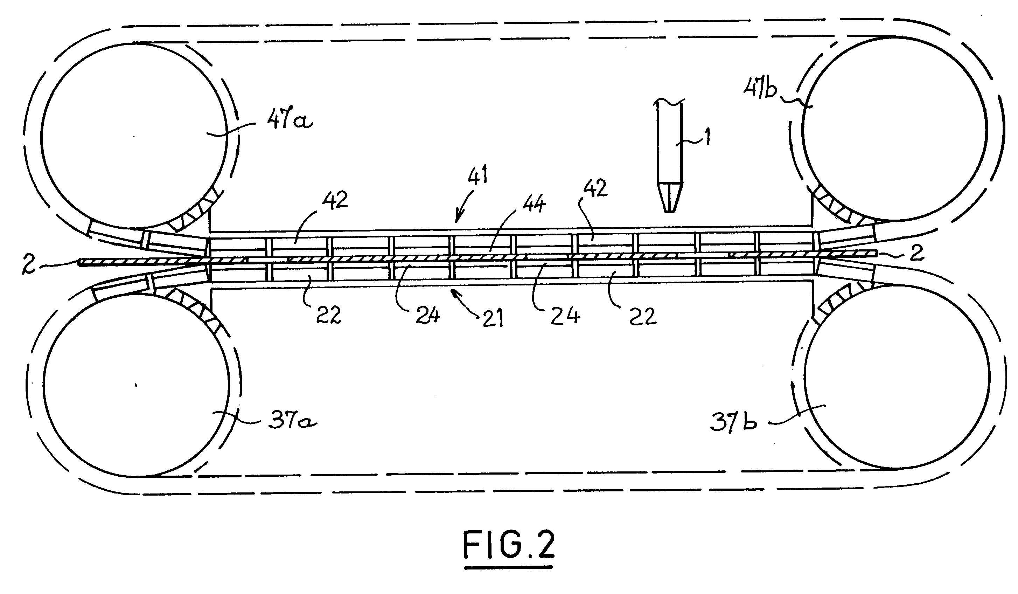

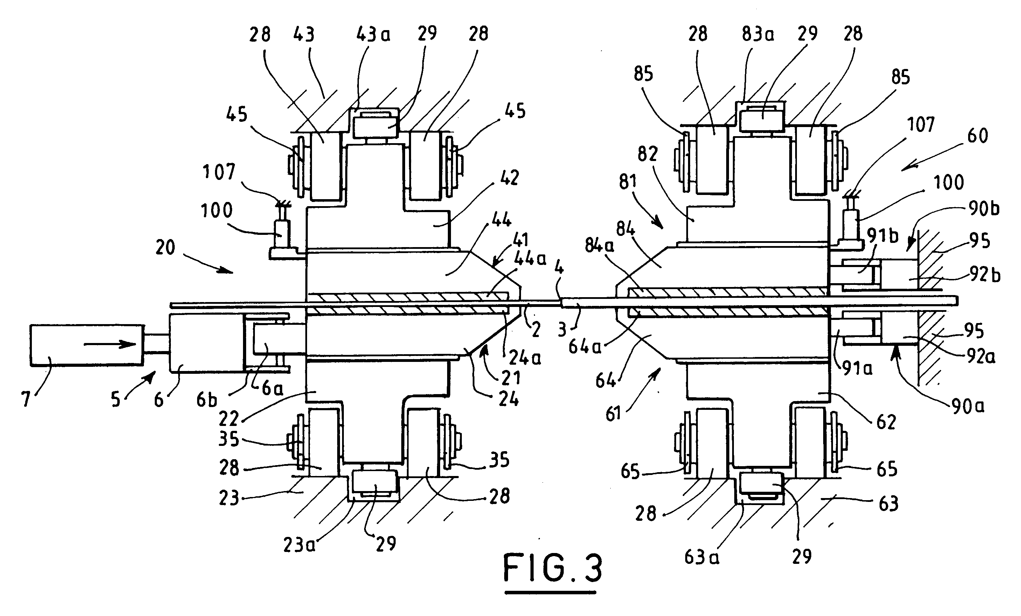

Ainsi que représenté sur les Figs. 2 et 3, l'ensemble 20 de support et de transfert des flans de tôle 2 comprend une série inférieure 21 de chariots 22 articulés entre eux dans un plan vertical et déplaçables parallèlement au plan de joint 4 des flans de tôle 2 et 3 sur un chemin de roulement 23 formant un plan de référence horizontal.

Comme on le verra plus en détails ultérieurement, les chariots 22 de la série inférieure 21 supportent chacun au moins un patin 24 déplaçable par rapport auxdits chariots 22 perpendiculairement au plan de joint 4 et constituant une surface de contact sensiblement continue avec la face inférieure des flans de tôle 2.

L'ensemble 20 de support et de transfert des flans de tôle 2 comprend également une série supérieure 41 de chariots 42 articulés entre eux dans un plan vertical, disposés en regard de la série inférieure et déplaçables parallèlement au plan de joint 4 sur un chemin de roulement 43.

Les chariots 42 de la série supérieure 41 supportent chacun au moins un patin 44 déplaçable par rapport auxdits chariots 42 perpendiculairement au plan de joint 4 des flans de tôle 2 et 3 et constituant une surface de contact sensiblement continue avec la surface supérieure des flans de tôle 2.

Les patins 24 de la série inférieure 21 de chariots 22 coopèrent avec des moyens 5 de mise en pression latérale des bords à souder des flans de tôle 2 et 3 par déplacement des patins 24 perpendiculairement au plan de joint 4 desdits flans de tôle 2 et 3.

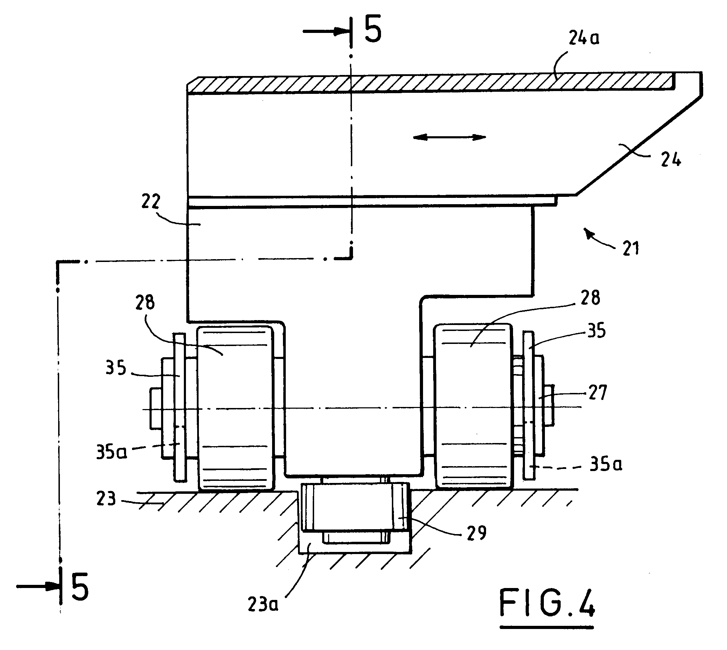

En se reportant maintenant aux Figs. 4 à 6, on va décrire les chariots 22 et les patins 24 de la série inférieure 21.

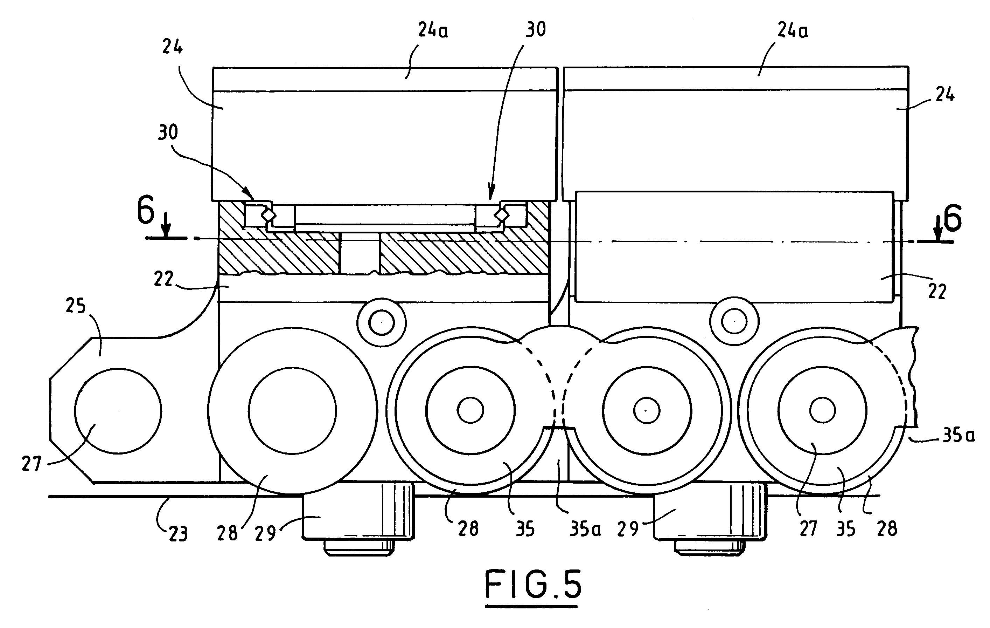

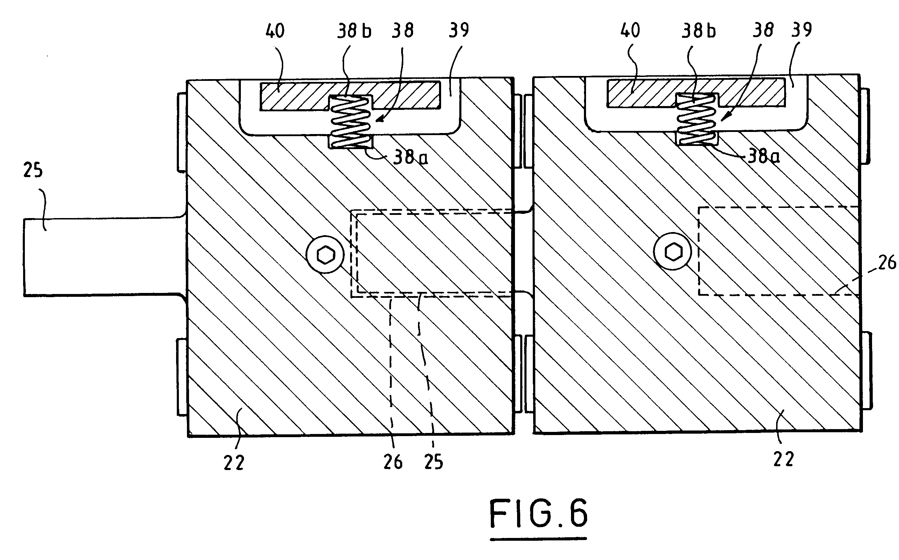

Ainsi que représenté sur les Figs. 5 et 6, chaque chariot 22 comporte à l'une de ses extrémités, comme par exemple son extrémité avant par rapport au sens de déplacement des chariots 22, un tenon 25.

D'autre part, chaque chariot 22 comporte, à son extrémité arrière, une mortaise 26 destinée à recevoir le tenon 25 du chariot adjacent.

Les chariots 22 sont articulés entre eux dans un plan vertical au moyen d'un axe 27 traversant la mortaise 26 et le tenon 25 de deux chariots 22 adjacents.

Chaque chariot 22 comporte également au moins deux galets 28 à axe horizontal, disposés chacun d'un côté du chariot 22 et destinés à coopérer avec le chemin de roulement 23 pour le guidage des chariots 22.

Dans l'exemple représenté sur les figures, chaque chariot 22 comporte quatre galets 28, deux d'un côté du chariot 22 et deux de l'autre côté dudit chariot.

De plus, chaque chariot 22 comporte au moins un galet 29 à axe vertical destiné à coopérer avec une rainure 23a (Fig. 4) ménagée dans le chemin de roulement 23.

La rainure 23a forme un axe de référence parallèle au plan de joint 4 des flans de tôle 2 et 3.

Les patins 24 sont indépendants les uns des autres et chaque patin 24 est monté déplaçable perpendiculairement au plan de joint 4 sur le chariot 22 correspondant par l'intermédiaire de deux rails de roulement 30 (Fig. 5) disposés chacun de part et d'autre de l'axe longitudinal dudit patin 24 et perpendiculairement au plan de joint 4 des flans de tôle 2 et 3.

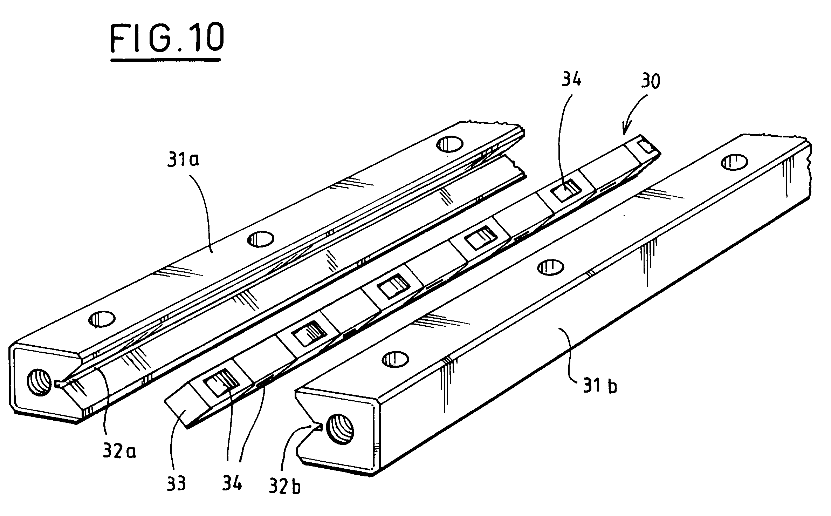

Comme représenté à la Fig. 10, chaque rail de roulement 30 est formé de deux baguettes 31a et 31b accolées, de section rectangulaire et munies sur leurs faces en regard d'une gorge 32a et 32b en forme de V à axe horizontal.

Le rail de roulement 30 comporte également une réglette 33 de section carrée, disposée entre les baguettes 31a et 31b au niveau des gorges 32a et 32b.

Cette réglette 33 comporte des rouleaux cylindriques 34 qui débordent de façon alternée sur chacune des faces de ladite réglette 33 de telle manière que les deux baguettes 31a et 31b coulissent l'une par rapport à l'autre.

L'une des deux baguettes, comme par exemple la baguette 31a, est solidaire du chariot 22 et l'autre desdites baguettes, comme par exemple la baguette 31b, est solidaire du patin 24 correspondant ce qui autorise le déplacement dudit patin 24 perpendiculairement au plan de joint 4 des flans de tôle 2 et 3 et empêche tout déplacement de ce patin 24 par rapport au chariot 22 dans une direction parallèle audit plan de joint 4.

Ainsi que représenté à la Fig. 6, chaque patin 24 comporte un ressort de rappel 38 disposé dans un évidement 39 ménagé dans la face supérieure du chariot 22 correspondant en contact avec ledit patin 24.

Une première extrémité 38a du ressort de rappel 38 est reliée au chariot 22 et une seconde extrémité 38b de ce ressort de rappel est reliée à une patte verticale 40 solidaire du patin 24 correspondant.

Ce ressort de rappel 38 a pour fonction de ramener le patin 24 correspondant dans sa position initiale après la mise en pression latérale des bords à souder des flans de tôle 2 et 3.

Les chariots 22 de la série 21 forment une boucle (Fig. 2) dans un plan vertical et comporte des moyens d'entraînement avec, d'une part, une première paire de roues dentées 37a parallèles, disposée à une extrémité de la boucle, et d'autre part, une seconde paire de roues dentées 37b parallèles, disposée à l'autre extrémité de ladite boucle.

Comme représenté sur les Figs. 3 à 5, les moyens d'engrènement des chariots 22 sont formés par des plaques verticales 35 fixées à chaque extrémité des axes 27 et de part et d'autre des chariots 22. Ces plaques verticales 35 sont uniformément réparties sur toute la longueur de la boucle formée par les chariot 22 et comportent chacune une encoche 35a de forme complémentaire aux dents des roues dentées 37a et 37b. Les encoches 35a coopèrent avec les dents roues dentées 37a et 37b pour l'entraînement des chariots 22 et l'entraînement en rotation des roues dentées 37a et 37b est réalisé par exemple par un système moto-réducteur, non représenté, entraînant l'une des paires des roues dentées 37a et 37b.

En se reportant aux Figs. 3, 7 et 8, on va décrire les chariots 42 et les patins 44 de la série supérieure 41.

Comme pour les chariots 22 de la série inférieure 21, les chariots 42 sont articulés entre eux dans un plan vertical au moyen d'un axe traversant la mortaise et le tenon de deux chariots 42 adjacents.

Chaque chariot 42 comporte également au moins deux galets 28 à axe horizontal, disposés chacun d'un côté du chariot 42 et destinés à coopérer avec un chemin de roulement 43 pour le guidage des chariots 42.

De préférence, chaque chariot 42 comporte quatre galets 28, deux d'un côté du chariot 42 et deux de l'autre côté dudit chariot.

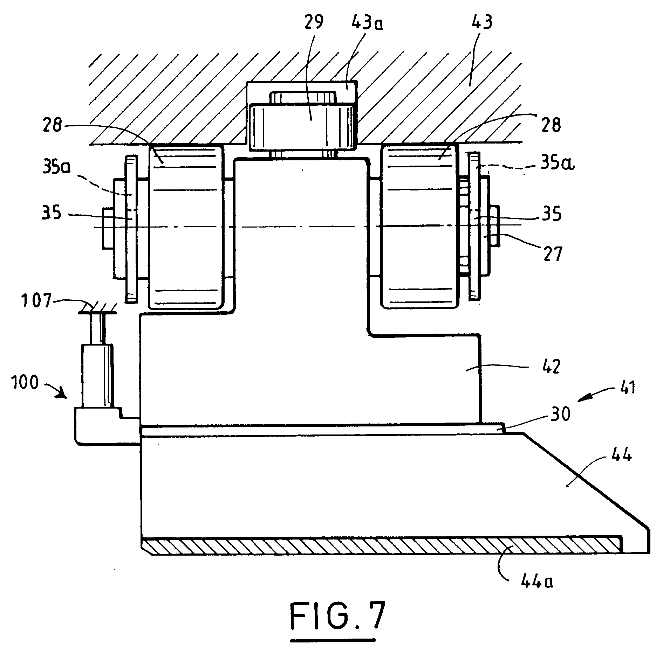

De plus, chaque chariot 42 comporte au moins un galet 29 à axe vertical destiné à coopérer avec une rainure 43a (Figs. 3 et 7) ménagée dans le chemin de roulement 43.

La rainure 43a forme également un axe de référence parallèle au plan de joint 4 des flans de tôle 2 et 3.

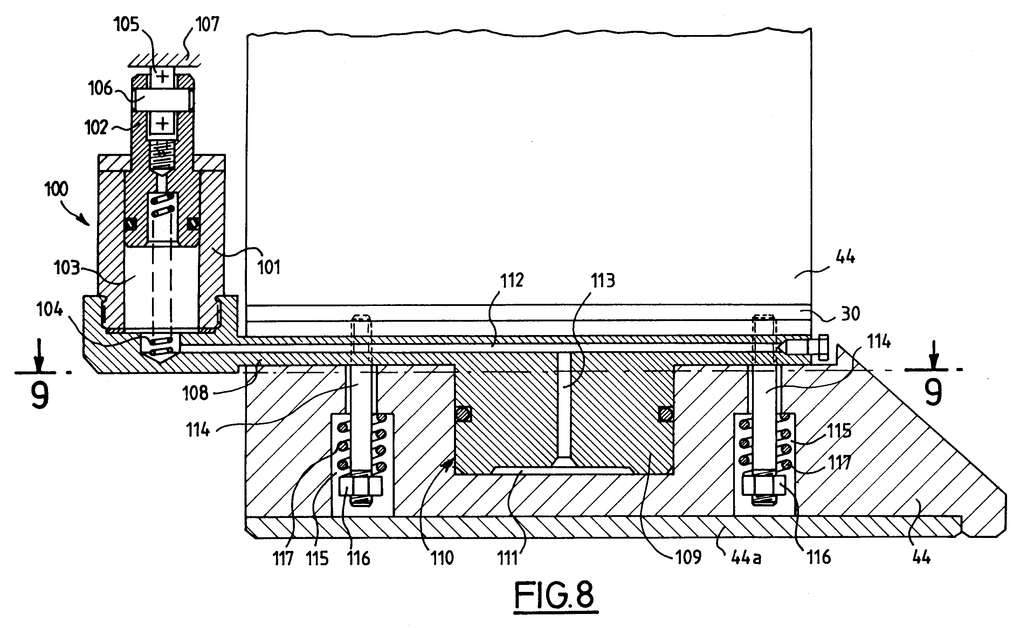

Les patins 44 sont indépendants les uns des autres et chaque patin 44 est monté déplaçable perpendiculairement au plan de joint 4 sur le chariot 42 correspondant par l'intermédiaire de deux rails de roulement 30 (Figs. 7 et 8) disposés chacun de part et d'autre de l'axe longitudinal dudit patin 44 et perpendiculairement au plan de joint 4 des flans de tôle 2 et 3.

Ces rails de roulement 30 sont identiques à ceux décrits précédemment pour les chariots 22 et les patins 24.

L'une des deux baguettes, comme par exemple la baguette 31a des rails de roulement 30, est solidaire du chariot 42 et l'autre desdites baguettes, comme par exemple la baguette 31b, est solidaire du patin 44 correspondant ce qui autorise le déplacement dudit patin 44 perpendiculairement au plan de joint 4 des flans de tôle 2 et 3 et empêche tout déplacement de ce patin 44 par rapport au chariot 42 dans une direction parallèle audit plan de joint 4.

Les chariots 42 de la série supérieure 41 forment une boucle (Fig. 2) dans un bloc vertical et comporte des moyens d'engrènement avec, d'une part, une première paire de roues dentées 47a parallèles, disposée à une extrémité de la boucle et, d'autre part, une seconde paire de roues dentées 47b parallèles, disposée à l'autre extrémité de ladite boucle.

Comme représenté sur les Figs. 3 et 7, les moyens d'engrènement des chariots 42 sont identiques aux moyens d'engrènement des chariots 22 de la série inférieure 21 et sont formés par des plaques verticales 45 fixées à chaque extrémité des axes 27 et de part et d'autre des chariots 42.

Ces plaques verticales 45 sont uniformément réparties sur toute la longueur de la boucle formée par les chariots 42 et comporte chacune des encoches 45a de forme complémentaire aux dents des roues dentées 47a et 47b.

Les encoches 45a coopèrent avec les dents des roues dentées 47a et 47b pour l'entraînement des chariots 42 et l'entraînement en rotation des roues dentées 47a et 47b est réalisé par exemple par un système moto-réducteur, non représenté, entraînant l'une des paires de roues dentées 47a et 47b.

Les patins 44 de la série supérieure 41 sont également pourvus de ressorts de rappel en position initiale.

L'ensemble 20 de support et de transfert des flans de tôle 2 coopère avec des moyens 100 de bridage sous effort vertical des flans de tôle 2.

En se reportant à la Fig. 8, on va décrire les moyens 100 de bridage sous l'effort vertical des flans de tôle 2 au niveau d'un patin 44, les moyens de bridage de chaque patin 44 étant identiques.

Les moyens 100 de bridage au niveau de chaque patin 44 sont formés par un vérin comprenant un corps 101 et un piston 102 monté coulissant dans le corps 101.

Le corps 101 et le piston 102 ménagent une chambre interne 103 contenant un fluide incompressible et ledit piston 102 est rappelé en position haute par un ressort 104 interposé entre ce piston 102 et le fond de la chambre 103.

Le piston 102 comporte à sa partie supérieure un galet 105 monté libre en rotation sur un axe horizontal 106 et destiné à coopérer avec une piste de roulement 107, comme on le verra ultérieurement.

Le patin 44 est supporté par le chariot 42 au moyen d'une embase 108 et des rails de roulement 30 interposés entre ledit chariot 42 et ladite embase 108.

Le patin 44 est déplaçable, par rapport au chariot 42 correspondant, d'une part, dans une direction perpendiculaire au plan de joint 4 des flans de tôle 2 et 3, grâce aux rails de roulement 30 et, d'autre part, dans une direction perpendiculaire aux flans de tôle 2.

A cet effet, la face inférieure de l'embase 108 comporte un piston vertical 109 destiné à pénétrer dans un trou borgne 110 formé dans le patin 44.

La surface inférieure du piston vertical 109 ménage avec le fond du trou borgne 110, une chambre 111 reliée à la chambre interne 103 par un premier conduit 112 disposé dans l'embase 108 et par un second conduit 113 traversant le piston vertical 109.

Le patin 44 est monté coulissant par rapport à la base 108 sur quatre tiges verticales 114.

Pour cela, les extrémités supérieures des tiges 114 sont fixées dans l'embase 112 et les extrémités inférieures de ces tiges sont logées chacune dans un évidement 115 ménagé dans le patin 44 et comporte un écrou 116. Un ressort 117 est disposé sur chaque tige 114 au-dessus de l'écrou 116 dans l'évidement 115 pour maintenir le patin 44 plaqué contre l'embase 112.

Chaque patin 24 et 44 comporte, sur sa face en contact avec les flans de tôle 2, une couche, respectivement 24a et 44a (Figs. 3, 4 et 8), d'un matériau assurant un coefficient de frottement suffisant pour créer l'adhérence sur les flans de tôle 2.

Ce matériau est constitué par exemple par un polymère.

Comme illustré à la Fig. 3, les moyens 5 de mise en pression latérale des bords à souder des flans de tôle 2 et 3 sont formés par exemple par un chemin de guidage latéral 6 coopérant, d'une part, avec les patins 24 et, d'autre part, avec au moins un organe de poussée 7 selon une direction perpendiculaire au plan de joint 4 des flans de tôle 2 et 3.

Le chemin de guidage 6 est formé par des galets 6a à axe vertical et libres en rotation, lesdits galets 6a étant en appui sur la surface latérale des patins 24 et montés sur un support 6b relié à l'organe de poussée 7.

L'organe de poussée 7 est constitué par exemple par un vérin.

L'ensemble 60 de support et de transfert des flans de tôle 3 comprend une série inférieure 61 de chariots 62 articulés entre eux dans un plan vertical et déplaçables parallèlement au plan de joint 4 sur une chemin de roulement 63 formant un plan de référence horizontal.

Les chariots 62 de la série inférieure 61 supportent chacun au moins un patin 64 fixe par rapport audit chariot 62.

Les patins 64 constituent une surface de contact sensiblement continue avec la face inférieure des flans de tôle 3.

L'ensemble 60 de support et de transfert des flans de tôle 3 comprend également une série supérieure 81 de chariots 82 articulés entre eux dans un plan vertical, disposés en regard de la série inférieure 61 de chariot 62 et déplaçables parallèlement au plan de joint 4 sur un chemin de roulement 83.

Les chariots 82 de la série supérieure 81 supportent chacun au moins un patin 84 constituant une surface de contact sensiblement continue avec la surface supérieure des flans de tôle 3.

Les chariots 62 et les patins 64 sont identiques aux chariots 22 et aux patins 24 et les chariots 82 et les patins 84 sont identiques aux chariots 42 et aux patins 44.

Mais, dans ce cas, les patins 64 et 84 sont fixes par rapport aux chariots 62 et 42 dans une direction perpendiculaire au plan de joint 4 des flans de tôles 2 et 3 si bien que ces patins 64 et 84 ne comportent pas de rails de roulement, ni de ressorts de rappel.

Par contre, les patins 84 sont déplaçables par rapport aux chariots 82 dans une direction perpendiculaire aux flans de tôle 3.

Chaque patin 64 et 84 comporte sur sa face en contact avec les flans de tôle 3, une couche respectivement 64a et 84a, d'un matériau assurant un coefficient de frottement suffisant pour créer l'adhérence avec les flans de tôle 3.

Ce matériau est constitué par exemple par un polymère.

L'entraînement des chariots 62 de la série inférieure 61 est identique à l'entraînement des chariots 22 de la série inférieure 21.

Ainsi, les chariots 62 de la série inférieure 61 forment une boucle dans un plan vertical et comportent des moyens d'engrènement avec deux paires de roues dentées disposées chacune à une extrémité de ladite boucle et identiques aux roues dentées 37a et 37b.

Comme représenté sur la Fig. 3, les moyens d'engrènement des chariots 62 sont formés par des plaques verticales 65 fixées à chaque extrémité des axes 27 et de part et d'autre des chariots 62.

Ces plaques verticales 65 sont uniformément réparties sur toute la longueur de la boucle formée par les chariots 62 et comportent chacune une encoche de forme complémentaire aux dents des roues dentées.

Par ailleurs, l'entraînement des chariots 82 de la série supérieure 81 est réalisé de la même manière que l'entraînement des chariots 42 de la série supérieure 41.

A cet effet, les chariots 82 forment une bouche dans un plan vertical et comportent des moyens d'engrènement avec deux paires de roues dentées disposées chacune à une extrémité de la boucle et identiques aux roues dentées 47a et 47b.

Comme représenté à la Fig. 3, les moyens d'engrènement des chariots 82 sont formés par des plaques verticales 85 fixées à chaque extrémité des axes 27 et de part et d'autre des chariots 82.

Ces plaques verticales 85 sont uniformément réparties sur toute la longueur de la boucle formée par les chariots 82 et comportent chacune une encoche de forme complémentaire aux dents des roues dentées.

L'ensemble 60 comporte également des moyens 100 de bridage sous effort vertical des flans de tôle 3.

Ces moyens 100 de bridage sous effort vertical des flans de tôle 3 sont identiques au moyen 100 de bridage sous effort vertical des flans de tôle 2.

Le dispositif de guidage et de transfert selon l'invention comporte également des moyens de maintien en référence selon un plan vertical du bord à souder de l'un des flans de tôle 2 ou 3 dans l'axe du faisceau à haute densité d'énergie 1.

Ces moyens de maintien en référence selon un plan vertical du bord à souder de l'un des flans de tôle, par exemple du flan de tôle 3, sont formés par deux chemins de guidage 90a et 90b latéraux, parallèles et disposés de part et d'autre du plan horizontal des flans de tôle 2 et 3.

Comme représenté à la Fig. 3, le chemin de guidage 90a est formé par des galets 91a à axe vertical et libres en rotation, lesdits galets 91a étant en appui sur la surface latérale des patins 64 et montés sur un support 92a fixé sur une surface de référence verticale 95.

Le chemin de guidage 90b est également formé par des galets 91b à axe vertical et libres en rotation, lesdits galets 91b sont en appui sur la surface latérale des patins 84 et montés sur un support 92b fixé sur la surface de référence verticale 95.

Ainsi, que représenté à la Fig. 3, les patins 24 et 44 ménagent avec les patins opposés 64 et 84 un espace suffisant pour le positionnement du faisceau à haute densité d'énergie 1 et le soudage des bords des flans de tôle 2 et 3.

De plus, la face latérale des patins, respectivement 24, 44, 64 et 84, dirigée vers les bords à souder des flans de tôle 2 et 3 est biseautée, tandis que la face latérale opposée est plane et verticale.

Dans la zone de soudage, les galets 105 des moyens 100 de bridage des flans de tôle 2 et 3 entrent progressivement en contact avec les pistes de roulement 107 ce qui provoque la descente successive des pistons 102 à l'encontre des ressorts de rappel 64 et cela pour chaque patin 44 et 84 arrivant dans ladite zone de soudage.

Le fluide incompressible se déplace des chambres internes 103 dans les chambres 111 des patins 44 et 84, exerçant ainsi une pression superficielle verticale sur lesdits patins de façon à pincer les flans de tôle 2 et 3 respectivement entre les patins 24 et 44; 64 et 84.

Par conséquent, chaque flan de tôle 2 et 3 est progressivement pincé entre les patins 24, 44, 64 et 84, puis entraîné par adhérence entre ces patins, grâce à la pression verticale exercée par les patins 44 et 84.

Les ensembles 20 et 60 sont entraînés en synchronisation les uns avec les autres ce qui permet d'entraîner les flans de tôles 2 et 3 dans la direction du faisceau à haute densité d'énergie 1, sans aucun glissement possible desdits flans de tôle par rapport aux patins sous pression.

La surface verticale de référence 95 permet de positionner le bord à souder du flan de tôle 3 dans l'axe du faisceau à haute densité d'énergie 1 et de venir appliquer le bord à souder du flan de tôle 2 contre ce bord à souder dudit flan de tôle 3 qui constitue un plan de référence aligné dans l'axe dudit faisceau à haute densité d'énergie 1.

Dans la zone de soudage, les moyens 5 de mise en pression latérale exercent, par l'intermédiaire des patins 24 et 44, une force sur le flan de tôle 2 dirigée perpendiculairement au plan de joint 4 et de ce fait une pression au niveau de ce plan de joint, ce qui permet de contrôler le jeu entre les bords à souder des deux flans de tôle au cours de leur déplacement pendant toute l'opération de soudage et d'éviter que lesdits bords à souder s'écartent du fait de la dilatation des flans de tôle lors de ce soudage.

L'effort appliqué est équilibré par la pression de contact entre les flans de tôle tout en évitant un glissement relatif entre les flans de tôle et les patins.

Les chemins de roulement 23 et 63 constituent des surfaces de référence horizontale ce qui permet de positionner la face des patins 24 et 64 en contact avec les faces inférieures des flans de tôle 2 et 3 dans un plan horizontal et d'obtenir ainsi un alignement des bords à souder des flans de tôle 2 et 3.

Dans l'exemple de réalisation décrit ci-dessus, chaque ensemble 20 et 60 comporte une série inférieure 21 et 61 de chariots 22 et 62 et une série supérieure 41 et 81 de chariots 42 et 82.

Selon une variante, chaque ensemble 20 et 60 peut comporter une série inférieure 21 et 61 de chariots 22 et 62 supportant chacun au moins un patin 24 et 64 ou une série supérieure 41 et 81 de chariots 42 et 82 supportant chacun au moins un patin 44 et 84.

Dans ce cas, les patins de la série qui ne comporte pas de chariots peuvent coopérer avec par exemple des rouleaux d'appui, libres en rotation et destinés à coopérer avec la face des patins opposée à celle en contact avec le flan de tôle correspondant.

Le montage des patins 24 et 44 sur des rails de roulement afin de permettre le déplacement de ces patins perpendiculairement au plan de joint 4 des flans de tôle 2 et 3, permet de dissocier le mouvement transversal desdits patins par rapport au mouvement longitudinal des chariots 22 et 42 supportant ces patins évitant ainsi une détérioration au niveau de la liaison articulée entre les chariots adjacents d'une même série de chariots.

De plus, le montage des patins 44 et 84 sur un piston vertical 109 supporté par une embase solidaire du chariot 42 et 82 correspondant permet de dissocier le mouvement vertical desdits patins par rapport aux chariots.

## Revendications

1. Dispositif de guidage et de transfert d'au moins deux flans de tôle (2, 3) préalablement accostés bord à bord pour former un plan de joint (4), notamment dans une installation de soudage en continu au moyen d'un faisceau à haute densité d'énergie (1), du type comprenant deux ensembles (20,60) de support et de transfert des flans de tôles (2, 3) en direction du faisceau à haute densité d'énergie (1), disposés chacun de part et d'autre du plan de joint (4) et déplaçables en synchronisation l'un avec l'autre, chaque ensemble (20,60) de support et de transfert comprenant au moins une série inférieure de patins (24,64) déplaçables perpendiculairement au plan de joint (4) et constituant une surface de contact sensiblement continue avec la face inférieure des flans de tôle (2, 3) et au moins une série supérieurs de patins (44, 84) déplaçables perpendiculairement au plan de joint (4), disposés en regard de la série inférieure de patins (24, 64) et constituant une surface de contact sensiblement continue avec la surface supérieure des flans de tôle (2, 3), les patins d'au moins une des deux séries coopérant avec des moyens (5) de mise en pression latérale des bords à souder des flans de tôle (2, 3) par déplacement desdits patins perpendiculairement au plan de joint (4) des flans de tôle (2, 3) et chaque ensemble (20, 60) de support et de transfert coopérant avec des moyens (100) de bridage sous effort vertical des flans de tôle (2, 3) correspondants, caractérisé en ce que chaque ensemble (20, 60) de support et de transfert comprend au moins une série inférieure (21,61) de chariots (22, 62) articulés entre eux dans un plan vertical et déplaçables parallèlement au plan de joint (4) sur un chemin de roulement (23, 63) formant un plan de référence horizontal, les chariots (22, 62) de ladite série inférieure (21, 61) supportant chacun au moins un desdits patins (24, 64) déplacable par rapport auxdits chariots (22, 62) perpendiculairement au plan de joint (4), ou au moins une série supérieure (41, 81) de chariots (42, 82) articulés entre eux dans un plan vertical et déplaçables parallèlement au plan de joint (4) sur un chemin de roulement (43, 83) formant un plan de référence horizontal, les chariots (42, 82) de ladite série supérieure (41,81) supportant chacun au moins un desdits patins (44,84) déplaçable par rapport auxdits chariots (42, 82) perpendiculairement au plan de joint (4).

2. Dispositif selon la revendication 1, caractérisé en ce que les patins (24, 44, 64, 84) de chaque série (21, 41, 61, 81) de chariots (22, 42, 62, 82) sont indépendants les uns des autres.

3. Dispositif selon la revendication 1, caractérisé en ce que chaque patin (44, 84) est monté déplaçable perpendiculairement aux flans de tôle (2, 3) sur le chariot (42, 82) correspondant.

4. Dispositif selon la revendication 1, caractérisé en ce que chaque patin (24, 44) est monté déplaçable perpendiculairement au plan de joint (4) sur le chariot (22, 42) correspondant par l'intermédiaire de deux rails de roulement (30) disposés chacun de part et d'autre de l'axe longitudinal dudit patin (24, 44) et perpendiculairement au plan de joint (4) des flans de tôle (2, 3).

5. Dispositif selon la revendication 4, caractérisé en ce que chaque rail de roulement (30) est formé de deux baguettes (31a, 31b) accolées, de section rectangulaire et munies sur leurs faces en regard d'une gorge (32a, 32b) en forme de V à axe horizontal et d'une réglette (33) à rouleaux cylindriques (34) disposées dans lesdites gorges (32a, 32b), l'une des deux baguettes (31a, 31b) étant solidaire du chariot (22, 42) et l'autre desdites baguettes étant solidaire du patin (24, 44) correspondant.

6. Dispositif selon la revendication 1, caractérisé en ce que chaque chariot (22, 42, 62, 82) comporte au moins deux galets (28) à axe horizontal, disposés chacun d'un côté du chariot (22, 42, 62, 82) et destinés à coopérer avec le chemin de roulement (23, 43, 63, 83) correspondant pour le guidage dudit chariot (22, 42, 62, 82).

7. Dispositif selon la revendication 1, caractérisé en ce que chaque chariot (22, 42, 62, 82) comporte au moins un galet (29) à axe vertical destiné à coopérer avec une rainure (23a, 43a, 63a, 83a) ménagée dans le chemin de roulement (23, 43, 63, 83) correspondant, ladite rainure (23a, 43a, 63a, 83a) formant un axe de référence parallèle en plan de joint (4) des flans de tôle (2, 3).

8. Dispositif selon l'une quelconque des revendications 1 à 5, caractérisé en ce que chaque patin (24, 44) comporte un ressort de rappel (38) disposé dans un évidement (39) ménagé sur la face supérieure du chariot (22, 42) correspondant en contact avec ledit patin (24, 44), une première extrémité (38a) du ressort de rappel (38) étant reliée au chariot (22, 42) et une seconde extrémité (38b) de ce ressort de rappel (38) étant reliée à une patte verticale (40) solidaire dudit patin (24, 44).

9. Dispositif selon l'une quelconque des revendications précédentes, caractérisé en ce que chaque patin (24, 44, 64, 84) comporte sur sa face en contact avec les flans de tôle (2, 3), une couche (24a, 44a, 64a, 84a) d'un matériau assurant un coefficient de frottement suffisant pour créer l'adhérence avec les flans de tôle (2, 3) correspondants, par exemple un polymère.

10. Dispositif selon la revendication 1, caractérisé en ce que les chariots (24, 44, 64, 84) de chaque série (21, 41, 61, 81) forment une boucle dans un plan vertical et comportent des moyens d'engrènement avec deux paires de roues dentées parallèles, disposées chacune à une extrémité de ladite boucle.

11. Dispositif selon la revendication 10, caractérisé en ce que les moyens d'engrènement sont formés par des plaques verticales (35, 45, 65, 85) disposées de part et d'autre des chariots (24, 44, 64, 84) et uniformément réparties sur toute la longueur de la boucle correspondante, chaque plaque verticale (35, 45, 65, 85) comportant une encoche de forme complémentaire aux dents des roues dentées.

12. Dispositif selon la revendication 1, caractérisé en ce que les moyens (5) de mise en pression latérale des bords à souder des flans de tôle (2, 3) sont formés par une chemin de guidage (6) latéral coopérant, d'une part, avec les patins (24) de la série inférieure (21) de chaque chariot et, d'autre part, avec au moins un organe de poussée (7) selon une direction perpendiculaire au plan de joint (4) des flans de tôle (2, 3).

13. Dispositif selon la revendication 12, caractérisé en ce que le chemin de guidage (6) est formé par les galets (6a) à axe vertical et libres en rotation.

14. Dispositif selon la revendication 12, caractérisé en ce que ledit organe de poussée est constitué par au moins un vérin (7).

15. Dispositif selon la revendication 3, caractérisé en ce que chaque patin (44, 84) est monté déplaçable perpendiculairement aux flans de tôle (2, 3) au moyen d'un piston vertical (109) supporté par une embase (108) solidaire du chariot (42, 82) correspondant et disposé dans un trou borgne (110) formé dans le patin (44, 84) correspondant, ledit piston vertical (109) ménageant avec ledit trou borgne (110) une chambre (111).

16. Dispositif selon les revendications 1 et 15, caractérisé en ce que les moyens (100) de bridage sous effort vertical des flans de tôle (2, 3) sont formés pour chaque patin (44, 84) par un vérin comportant un piston (102) muni à son extrémité supérieure d'un galet (105) destiné à coopérer avec une piste de roulement (107) et d'une chambre interne (103) contenant un fluide incompressible, ladite chambre interne (103) communiquant avec la chambre (111) ménagée dans le patin (44, 84) correspondant par un premier conduit (112) disposé dans l'embase (108) et par un second conduit (113) traversant le piston vertical (109).

## Claims

1. Arrangement for guiding and transferring at least two sheet metal blanks (2, 3) previously butted edge to edge to form a joining plane (4), in particular in a continuous welding installation using a high energy-density beam (1), of the type comprising two assemblies (20, 60) for supporting and transferring the sheet metal blanks (2, 3) in the direction of the high-energy density beam (1), each disposed on one side and the other of the joining plane (4) and displaceable in synchronism with one another, each supporting and transfer assembly (20, 60) comprising at least one lower set of shoes (24, 64) displaceable perpendicular to the joining plane (4) and constituting a substantially continuous contact surface with the lower face of the sheet metal blanks (2, 3) and at least one upper set of shoes (44, 84) displaceable perpendicular to the joining plane (4), arranged facing the lower set of shoes (24, 64) and constituting a substantially continuous surface of contact with the upper surface of the sheet metal blanks (2, 3), the shoes of at least one of the two sets co-operating with means (5) for applying lateral pressure to the edges to be welded on the sheet metal blanks (2, 3) by displacing the said shoes perpendicular to the joining plane (4) of the sheet metal blanks (2, 3) and each supporting and transfer assembly (20, 60) co-operating with means (100) for locating under a vertical effort the associated sheet metal blanks (2, 3), characterised in that each supporting and transfer assembly (20, 60) comprises at least one lower set (21, 61) of carriages (22, 62) articulated together in a vertical plane and displaceable parallel to the joining plane (4) on a rolling track (23, 63) forming a horizontal reference plane, the carriages (22, 62) of the said lower set (21, 61) each supporting at least one of the said shoes (24, 64) to be displaceable with respect to the said carriages (22, 62) perpendicular to the joining plane (4), or at least upper set (41, 81) of carriages (42, 82) articulated together in a vertical plane and displaceable parallel to the joining plane (4) on a rolling track (43, 83) forming a horizontal reference plane, the carriages (42, 82) of the said upper set (41, 81) each supporting at least one of the said shoes (44, 84) to be displaceable with respect to the said carriages (42, 82) perpendicular to the joining plane (4).

2. Arrangement according to claim 1, characterised in that the shoes (24, 44, 64, 84) of each set (21, 41, 61, 81) of carriages (22, 42, 62, 82) are independent of one another.

3. Arrangement according to claim 1, characterised in that each shoe (44, 84) is mounted to be displaceable perpendicular to the sheet metal blanks (2, 3) on the associated carriage (42, 82).

4. Arrangement according to claim 1, characterised in that each shoe (24, 44) is mounted to be displaceable perpendicular to the joining plane (4) on the associated carriage (22, 42) through the intermediary of two rolling rails (30) each arranged on one side and the other of the longitudinal axis of the said shoe (24, 44) and perpendicular to the joining plane (4) of the sheet metal blanks (2, 3).

5. Arrangement according to claim 4, characterised in that each rolling rail (30) is formed by two bars (31a, 31b) side-by-side of rectangular section and provided on their mutually opposed faces with a throat (32a, 32b) of Vee-shape with its axis horizontal and by a slide (33) with cylindrical rollers (34) received in the said throats (32a, 32b) one of the two bars (31a, 31b) being connected to the carriage (22, 42) and the other of the said bars being connected to the associated shoe (24, 44).

6. Arrangement according to claim 1, characterised in that each carriage (22, 42, 62, 82) has at least two rollers (28) with their axes horizontal, each disposed on one side of the carriage (22, 42, 62, 82) and designed to co-operate with the associated rolling track (23, 43, 63, 83) for guiding the said carriage (22, 42, 62, 82).

7. Arrangement according to claim 1, characterised in that each carriage (22, 42, 62, 82) has at least one roller (29) with a vertical axis designed to co-operate with a groove (23a, 43a, 63a, 83a) provided in the associated rolling track (23, 43, 63, 83), the said groove (23a, 43a. 63a, 83a) forming a parallel reference axis in the joining plane (4) of the sheet metal blanks (2, 3).

8. Arrangement according to any one of claims 1 to 5, characterised in that each shoe (24, 44) has a return spring (38) arranged in a recess (39) provided on the upper face of the associated carriage (22, 42) in contact with the said shoe (24, 44), a first end (38a) of the return spring (38) being connected to the carriage (22, 42) and a second end (38b) of this return spring (38) being connected to a vertical strap (40) connected to the said shoe (24, 44).

9. Arrangement according to any one of the foregoing claims, characterised in that each shoe (24, 44, 64, 84) has one its face in contact with the sheet metal blanks (2, 3) a pad (24a, 44a, 64a, 84a) of a material providing a co-efficient of friction sufficient to create adhesion to the associated sheet metal blanks (2, 3), for example a polymer.

10. Arrangement according to claim 1, characterised in that the carriages (24, 44, 64, 84) of each set (21, 41, 61, 81) form a loop in a vertical plane and have means for engagement with two pairs of parallel sprockets each arranged at one end of the said loop.

11. Arrangement according to claim 10, characterised in that the means for engagement are formed by vertical plates (35, 45, 65, 85) arranged on one side and the other of the carriages (24, 44, 64, 84) and uniformly spaced throughout the length of the associates loop, each vertical plate (35, 45, 65, 85) having a notch of shape complementary to the teeth of the sprockets.

12. Arrangement according to claim 1, characterised in that the means (5) for applying lateral pressure to the edges to be welded on the sheet metal blanks (2, 3) are formed by a lateral guide track (6) co-operating on the one hand with the shoes (24) of the lower set (21) of each carriage and on the other hand with at least one member (7) for pushing along a direction perpendicular to the joining plane (4) of the sheet metal blanks (2, 3).

13. Arrangement according to claim 12, characterised in that the guide track (6) is formed by freely rotatable rollers (6a) having their axes vertical.

14. Arrangement according to claim 12, characterised in that the said pushing member is constituted by at least one ram (7).

15. Arrangement according to claim 3, characterised in that each shoe (44, 84) is mounted to be displaceable perpendicular to the sheet metal blanks (2, 3) by means of a vertical piston (109) supported by a base (108) joined to the associated carriage (42, 82) and arranged in a blind hole (110) formed in the associated shoe (44, 84), the said vertical piston (109) defining with the said blind hole (110) a chamber (111).

16. Arrangement according to claims 1 and 15, characterised in that the means (100) for locating the sheet metal blanks (2, 3) under vertical effort are formed for each shoe (44, 84) by a ram comprising a piston (102) provided at its upper end with a roller (105) designed to co-operate with a rolling track (107) and an internal chamber (103) containing an incompressible fluid, the said internal chamber (103) communications with the chamber (111) provided in the associated shoe (44, 84) through a first passage (112) provided in the base (108) and through a second passage (113) extending through the vertical piston (109).

## Patentansprüche

1. Führungs- und Verlegungsvorrichtung für wenigstens zwei zuvor unter Bildung einer Stoßebene stumpf aneinandergefügte Blechzuschnitte (2, 3) insbesondere in einer Anlage zum kontinuierlichen Schweißen mit Hilfe eines Strahls (1) hoher Energiedichte, bestehend aus zwei Einheiten (20, 60) zum Tragen und Verlegen der Blechzuschnitte (2, 3) in Richtung auf den Strahl (1) hoher Energiedichte, die zu beiden Seiten der Stoßebene (4) angeordnet sind und miteinander synchron beweglich sind, wobei jede Trag- und Verlegungseinheit (20, 60) wenigstens eine untere Reihe von Schlitten (24, 64) aufweist, die senkrecht zur Stoßebene (4) beweglich sind und eine im wesentlichen durchgehende Kontaktfläche mit der Unterseite der Blechzuschnitte (2, 3) bilden, sowie mindestens eine obere Reihe von Schlitten (44, 84), die senkrecht zur Stoßebene (4) beweglich sind, gegenüber der unteren Reihe von Schlitten (24, 64) angeordnet sind und eine im wesentlichen durchgehende Kontaktfläche mit der Oberseite der Blechzuschnitte (2, 3) bilden, wobei die Schlitten wenigstens einer der beiden Reihen mit Einrichtungen (5) zur Ausübung eines seitlichen Drucks auf die zu verschweißenden Kanten der Blechzuschnitte (2, 3) durch Bewegung dieser Schlitten senkrecht zur Stoßebene (4) der Blechzuschnitte (2, 3) zusammenwirken und jede Trag- und Verlegungseinheit (20, 60) mit Einrichtungen (100) zum Einspannen der entsprechenden Blechzuschnitte (2,3) durch Ausübung einer vertikalen Kraft zusammenwirkt, dadurch gekennzeichnet, daß jede Trag- und Verlegungseinheit (20, 60) wenigstens eine untere Reihe (21, 61) von Wagen (22, 62), die in einer vertikalen Ebene aneinander angelenkt sind und parallel zur Stoßebene (4) auf einer eine horizontale Bezugsebene bildenden Laufbahn (23, 63) beweglich sind, wobei die Wagen (22, 62) der unteren Reihe (21, 61) jeweils mindestens einen der Schlitten (24, 64) tragen, die bezüglich dieser Wagen (22, 62) senkrecht zur Stoßebene (4) beweglich sind, oder wenigstens eine obere Reihe (41, 81) von Wagen (42, 82) aufweist, die in einer vertikalen Ebene aneinander angelenkt sind und parallel zur Stoßebene (4) auf einer eine horizontale Bezugsebene bildenden Laufbahn (43, 83) beweglich sind, wobei die Wagen (42, 82) der oberen Reihe (41, 81) jeweils mindestens einen der Schlitten (44, 84) tragen, die bezüglich dieser Wagen (42, 82) senkrecht zur Stoßebene (4) beweglich sind.

2. Vorrichtung nach Anspruch 1, dadurch gekennzeichnet, daß die Schlitten (24, 44, 64, 84) jeder Reihe (21, 41, 61, 81) von Wagen (22, 42, 62, 82) voneinander unabhängig sind.

3. Vorrichtung nach Anspruch 1, dadurch gekennzeichnet, daß jeder Schlitten (44, 84) auf dem entsprechenden Wagen (42, 82) senkrecht zu den Blechzuschnitten (2, 3) beweglich montiert ist.

4. Vorrichtung nach Anspruch 1, dadurch gekennzeichnet, daß jeder Schlitten (24, 44) auf dem entsprechenden Wagen (22, 42) senkrecht zur Stoßebene (4) beweglich über zwei Laufschieneneinheiten (30) montiert ist, die zu beiden Seiten der Längsachse des Schlittens (24, 44) senkrecht zur Stoßebene (4) der Blechzuschnitte (2, 3) angeordnet sind.

5. Vorrichtung nach Anspruch 4, dadurch gekennzeichnet, daß jede Laufschieneneinheit (30) aus zwei nebeneinandergesetzten Schienen (31a, 31b) mit rechteckigem Querschnitt, die auf ihren gegenüberstehenden Seiten eine V-förmige Nut (32a, 32b) mit horizontaler Achse aufweisen, und aus einer Leiste (33) mit zylindrischen Rollen (34) besteht, die in den Nuten (32a, 32b) angeordnet sind, wobei eine der beiden Schienen (31a, 31b) mit dem Wagen (22, 42) und die andere der Schienen mit dem entsprechenden Schlitten (24, 44) fest verbunden ist.

6. Vorrichtung nach Anspruch 1, dadurch gekennzeichnet, daß jeder Wagen (22, 42, 62, 82) wenigstens zwei Rollen (28) mit horizontaler Achse aufweist, die jeweils auf einer Seite des Wagens (22, 42, 62, 82) angeordnet sind und dazu bestimmt sind, mit der entsprechenden Laufbahn (23, 43, 63, 83) zur Führung des Wagens (22, 42, 62, 82) zusammenzuwirken.

7. Vorrichtung nach Anspruch 1, dadurch gekennzeichnet, daß jeder Wagen (22, 42, 62, 82) wenigstens eine Rolle (29) mit vertikaler Achse besitzt, die dazu bestimmt ist, mit einer in der entsprechenden Rollbahn (23, 43, 63, 83) vorgesehenen Nut (23a, 43a, 63a, 83a) zusammenzuwirken, die eine zur Stoßebene (4) der Blechzuschnitte (2, 3) parallele Bezugsachse bildet.

8. Vorrichtung nach einem der Ansprüche 1 bis 5, dadurch gekennzeichnet, daß jeder Schlitten (24, 44) eine Rückstellfeder (38) aufweist, die in einer Aussparung (39) angeordnet ist, die auf der mit dem Schlitten (24, 44) in Kontakt befindlichen Oberseite des entsprechenden Wagens (22, 42) vorgesehen ist, wobei ein erstes Ende (38a) der Rückstellfeder (38) mit dem Wagen (22, 42) und ein zweites Ende (38b) dieser Rückstellfeder (38) mit einem mit dem Schlitten (24, 44) fest verbundenen vertikalen Lappen (40) verbunden ist.

9. Vorrichtung nach einem der vorhergehenden Ansprüche, dadurch gekennzeichnet, daß jeder Schlitten (24, 44, 64, 84) auf seiner mit den Blechzuschnitten (2, 3) in Kontakt befindlichen Seite eine Schicht (24a, 44a, 64a, 84a) aus einem Werkstoff, beispielsweise einem Polymer, mit einem so hohen Reibungskoeffizienten aufweist, daß die Haftung an den entsprechenden Blechzuschnitten (2, 3) gewährleistet wird.

10. Vorrichtung nach Anspruch 1, dadurch gekennzeichnet, daß die Wagen (24, 44, 64, 84) jeder Reihe (21, 41, 61, 81) eine Schleife in einer vertikalen Ebene bilden und Einrichtungen zum Eingreifen in zwei Paare von jeweils an einem Ende der Schleife angeordneten, parallelen Zahnrädern aufweisen.

11. Vorrichtung nach Anspruch 10, dadurch gekennzeichnet, daß die Eingriffseinrichtungen aus vertikalen Platten (35, 45, 65, 85) bestehen, die zu beiden Seiten der Wagen (24, 44, 64, 84) angeordnet und auf der ganzen Länge der entsprechenden Schleife gleichmäßig verteilt sind, wobei jede vertikale Platte (35, 45, 65, 85) einen Einschnitt mit einer zu den Zähnen der Zahnräder ergänzenden Form besitzt.

12. Vorrichtung nach Anspruch 1, dadurch gekennzeichnet, daß die Einrichtungen (5) zum Ausüben eines seitlichen Drucks auf die zu verschweißenden Kanten der Blechzuschnitte (2, 3) aus einer seitlichen Laufbahn (6) bestehen, die einerseits mit den Schlitten (24) jedes Wagens der unteren Reihe (21) und andererseits mit wenigstens einem Organ (7) zur Ausübung eines Schubs in einer zur Stoßebene (4) der Blechzuschnitte (2, 3) senkrechten Richtung zusammenwirken.

13. Vorrichtung nach Anspruch 12, dadurch gekennzeichnet, daß die Laufbahn (6) von frei drehbaren Rollen (6a) mit vertikaler Achse gebildet wird.

14. Vorrichtung nach Anspruch 12, dadurch gekennzeichnet, daß das Organ zur Ausübung eines Schubs aus mindestens einer Kolben-Zylinder-Einheit (7) besteht.

15. Vorrichtung nach Anspruch 3, dadurch gekennzeichnet, daß jeder Schlitten (44, 84) senkrecht zu den Blechzuschnitten (2, 3) mit Hilfe eines vertikalen Kolbens (109) beweglich montiert ist, der von einer mit dem entsprechenden Wagen (42, 82) fest verbundenen Grundplatte (108) getragen ist und in einem in dem entsprechenden Schlitten (44, 84) gebildeten Sackloch (110) angeordnet ist, mit dem der vertikale Kolben (109) eine Kammer (111) abgrenzt.

16. Vorrichtung nach Anspruch 1 und 15, dadurch gekennzeichnet, daß die Einrichtungen (100) zum Einspannen der Blechzuschnitte (2, 3) durch Ausübung einer vertikalen Kraft bei jedem Schlitten (44, 84) aus einer Kolben-Zylinder-Einheit bestehen, die einen Kolben (102) aufweist, der an seinem oberen Ende mit einer Rolle (105) versehen ist, die dazu bestimmt ist, mit einer Laufbahn (107) zusammenzuwirken, sowie eine ein nicht komprimierbares Fluid enthaltende innere Kammer (103), die mit der in dem entsprechenden Schlitten (44, 84) vorgesehenen Kammer (111) durch einen ersten in der Grundplatte (108) angeordneten Kanal (112) und durch einen zweiten den vertikalen Kolben (109) durchquerenden Kanal (113) in Verbindung steht.
